Europäisches Patentamt

European Patent Office

Office européen des brevets

(19)

(11) Veröffentlichungsnummer: **0 339 428 B1**

(12) **EUROPÄISCHE PATENTSCHRIFT**

(45) Veröffentlichungstag der Patentschrift:
14.08.91 Patentblatt 91/33

(51) Int. Cl.⁵: **F16B 13/06**

(21) Anmeldenummer: **89106848.8**

(22) Anmeldetag: **17.04.89**

(54) **Spreizanker.**

(30) Priorität: **23.04.88 DE 3813738**

(43) Veröffentlichungstag der Anmeldung:
**02.11.89 Patentblatt 89/44**

(45) Bekanntmachung des Hinweises auf die
Patenterteilung:
**14.08.91 Patentblatt 91/33**

(84) Benannte Vertragsstaaten:
**AT BE CH DE ES FR GB GR IT LI LU NL SE**

(56) Entgegenhaltungen:
**AT-B- 337 959
CH-A- 433 671
DE-A- 3 031 048
DE-A- 3 420 375
US-A- 4 287 807**

(73) Patentinhaber: **Upat GmbH & Co
Freiburger Strasse 9 Postfach 1320
W-7830 Emmendingen (DE)**

(72) Erfinder: **Frischmann, Albert
Hürnheimweg 3
W-7832 Kenzingen (DE)**
Erfinder: **Ziereisen, Peter
Vogesenstrasse 9
W-7831 Weisweill (DE)**

(74) Vertreter: **Rackette, Karl, Dipl.-Phys. Dr.-Ing
Kaiser-Joseph-Strasse 179 Postfach 1310
W-7800 Freiburg (DE)**

## Beschreibung

Die Erfindung betrifft einen Spreizanker mit einer am Einsteckende eine innere Einführungsfase und mehrere sich in axialer Richtung erstreckende Schlitze aufweisenden Spreizhülse, durch die sich eine Ankerstange erstreckt, die an ihrem dem Einsteckende des Spreizankers zugewandten Ende über einen zum Aufspreizen der Spreizhülse axial in diese einziehbaren Spreizkonus verfügt, wobei der Außendurchmesser der Spreizhülse im Bereich der durch die Schlitze gebildeten Spreizschenkel konstant ist.

Ein derartiger Spreizanker ist aus der DE-A-3031048 bekannt und verfügt über einen Spreizkonus, dessen Kegelwinkel kleiner als der Kegelwinkel der Einführungsfase ist. Aus diesem Grunde erfolgt beim Einziehen des Spreizkonus zunächst ein Aufspreizen an den zurückgezogen liegenden Wurzeln der Einführungsfasen, wobei ein Ausknicken der Spreizschenkel in diesem Bereich durch mehrere Querschlitze oder Durchbrüche ermöglicht wird.

Aus der DE-A-3420375 ist ein Dübel mit einer Spreizhülse und einem Spreizkonus bekannt, der aufgrund eines konkav gewölbten Abschnittes am kegelförmigen Spreizkonus am Ende des Spreizvorgangs bei einem abnehmenden Einzugsweg des Spreizkonus in die Spreizhülse eine sich verstärkende Aufspreizung gestattet. Im Gegensatz zur Spreizhülse beim Spreizanker gemäß der DE-A-3031048 verfügt die Spreizhülse über eine zum rückwärigen Ende der Spreizhülse hin verjüngte Sägezahnrille an der Außenfläche der Spreizhülse, die von den freien Enden der Spreizschenkel ausgeht und schon bei relativ geringen Spreizdruckkräften ein tiefes Eingraben der Spreizschenkel in die Bohrlochwandung erlauben soll.

Ausgehend von diesem Stand der Technik liegt der Erfindung die Aufgabe zugrunde, einen Spreizanker zu schaffen, der trotz eines einfachen und leicht zu realisierenden Aufbaus zur Verankerung in der Rißzone von Bauwerken geeignet ist und beim Auftreten von Rissen, die zu einer Bohrlochvergrößerung führen, selbständig nachspreizen kann.

Diese Aufgabe wird erfindungsgemäß dadurch gelöst, daß der Kegelwinkel der inneren Einführungsphase kleiner als der Kegelwinkel des Spreizkonus ist, und daß an dem in Einsteckrichtung weisenden freien Ende der Spreizschenkel innerhalb der Einführungsfase eine umlaufende radial nach innen vorspringende Wulst ausgebildet ist.

Durch die am besten an der vorderen Stirnkante der Spreizschenkel ausgebildete Wulst wird beim Einziehen des Spreizkonus eine Materialverformung an den vorderen freien Enden der Spreizschenkel erreicht, wobei sich die vorderen Enden der Spreizschenkel infolge einer hohen ringförmigen Pressung in die Wandung des Bohrloches einschneiden und dort eine tiefe Hinterschneidung mit einer geringfügigen Breite erzeugen. Wenn sich der Bohrlochdurchmesser infolge eines Risses erweitert, fällt zwar die Spannung zwischen der Spreizhülse und der Betonwandung stark oder ganz ab, jedoch bleibt ein Verzahnungseffekt des Wulstes vorhanden, der wiederum bei Auftreten von größeren Zuglasten dafür sorgt, daß die Spreizhülse auf der Stelle fixiert bleibt und der Spreizkonus in die Hülse hineinschlüpft. Dabei sind die Reibungsverhältnisse zwischen dem Spreizkonus und der Spreizhülse nicht kritisch und brauchen daher nicht genau definiert sein.

Die Mantelfläche der Spreizhülse ist vorzugsweise glatt ausgebildet, um ein problemloses Setzen des Spreizankers zu ermöglichen. Nach dem Setzvorgang liegen die Spreizschenkel im konischen Bereich der inneren Einführungsfasen an der Bohrlochwandung an, wobei die Flächenpressung gleichmäßig verteilt und dadurch gering ist. Die gesamte Energie am Anfang des Setzvorganges wird zum Ausstellen der Spreizschenkel im Bereich des in Umfangsrichtung umlaufenden und durch die Schlitze unterbrochenen Wulstes verwendet.

Zweckmäßige Ausgestaltungen und Weiterbildungen der Erfindung sind Gegenstand der abhängigen Ansprüche 2 bis 7.

Nachfolgend wird ein Ausführungsbeispiel der Erfindung anhand der Zeichnung näher erläutert. Es zeigen:

Fig. 1    einen Spreizanker gemäß der Erfindung nach dem Einsetzen in ein zylindrisches Bohrloch in einer Seitenansicht teilweise im Schnitt,

Fig. 2    einen Halbschnitt durch den Spreizkonus und das vordere freie Ende eines Spreizschenkels in einer gegenüber Fig. 1 vergrößerten Darstellung und

Fig. 3    eine der Fig. 2 entsprechende Darstellung zur Veranschaulichung der Verformung der Spreizschenkel und des Eingrabens der Spreizschenkelenden am Ende des Spreizvorgangs.

In der Zeichnung erkennt man einen Bauwerkstoff 1, in dem ein zylindrisches Bohrloch 2 zum Setzen eines Spreizankers 3 gebohrt worden ist, mit dessen Hilfe ein Befestigungsgegenstand 4 am Bauwerkstoff 1 befestigt werden soll. Der Befestigungsgegenstand 4 wird dabei über eine Unterlegscheibe 5 gegen die Oberfläche 6 des Bauwerkstoffes 1 mit Hilfe einer Sechskantmutter 7 gepreßt, die auf das Gewinde 8 einer Ankerstange 9 aufgeschraubt ist. Bei einer in der Zeichnung nicht dargestellten Ausführungsform ist statt der Sechskantmutter 7 der Kopf eines Schraubenbolzens vorgesehen, um auf die Unterlegscheibe 5 eine Andruckkraft auszuüben.

Der Spreizanker 3 verfügt neben der sich bis in die Nähe des Bohrlochgrundes 10 erstreckenden Anker-

2

stange 9 über einen Spreizkonus 11, der auf das Gewinde 8 der Ankerstange 9 aufschraubbar ist. Bei einem in der Zeichnung nicht dargestellten Ausführungsbeispiel ist der Spreizkonus 11 fest mit der Ankerstange 9 verbunden. Wie man in der Zeichnung erkennt, verfügt der Spreizkonus 11 über einen kurzen zylindrischen Fortsatz 12 an dem zum Bohrlochgrund 10 weisenden Ende. Der Durchmesser des kegelförmigen Spreizkonus 11 verkleinert sich mit größer werdendem Abstand vom zylindrischen Fortsatz 12.

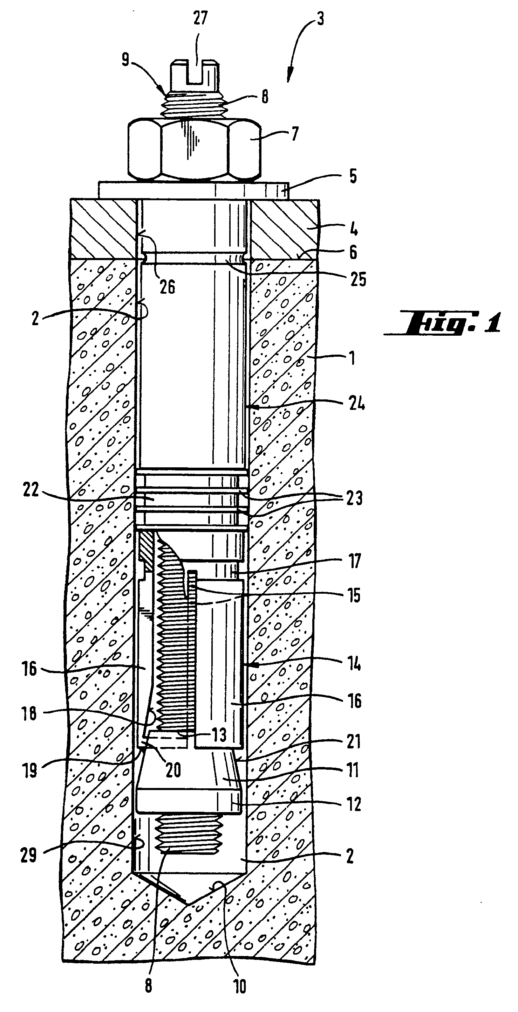

Wie man in Fig. 1 erkennt, taucht das verjüngte Ende 13 des Spreizkonus 11 in eine Spreizhülse 14 ein, die über mehrere Schlitze 15 verfügt, durch die mehrere Spreizschenkel 16, beispielsweise vier Spreizschenkel 16, gebildet sind. Im Bereich der Wurzeln der Spreizschenkel 16 ist in der Spreizhülse 14 eine umlaufende Ringnut 17 vorgesehen, in der die Schlitze 15 enden. Außerhalb der Ringnut 17 ist die Mantelfläche der Spreizhülse 14 glatt, so daß die Spreizhülse 14 im Bereich der Spreizschenkel 16 überall den gleichen Außendurchmesser hat.

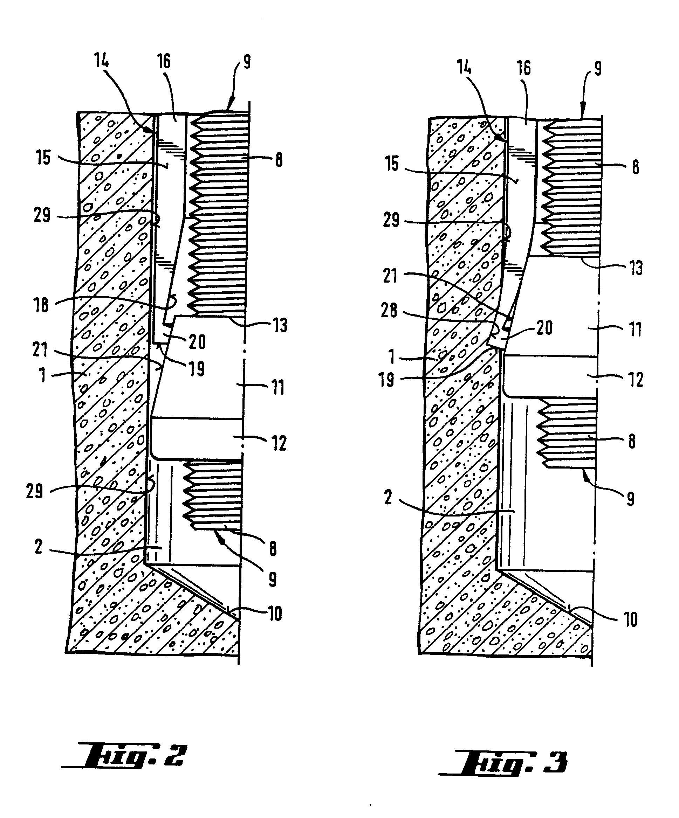

Der Innendurchmesser der Spreizhülse 14 ist hingegen nicht überall konstant, sondern erweitert sich im Bereich der freien Enden der Spreizschenkel 16, was in Fig. 2 zur Verdeutlichung vergrößert dargestellt ist.

Die Spreizhülse 14 verfügt am einsteckseitigen Ende über eine Einführungsfase 18, durch die die freien Enden der Spreizschenkel 16 eine konische Verjüngung in Richtung der Stirnflächen 19 der Spreizschenkel 16 erfahren. Die konische Verjüngung im Bereich der Einführungsfase 18 jeden Spreizschenkels 16 ist jedoch im Bereich einer ringförmig umlaufenden Wulst 20 unterbrochen. Die Wulst 20 befindet sich vorzugsweise am freien Ende der Spreizschenkel 16 in unmittelbarer Nähe der Stirnflächen 19 der Spreizschenkel 16.

Wie man den Fig. 1 und 2 entnehmen kann, hat die Einführungsfase 18 etwa eine Länge, die einem Drittel der Länge der Spreizschenkel 16 entspricht. Der Kegelwinkel im Bereich der Einführungsfase 18 beträgt beispielsweise 6 Grad, wenn der dem Spreizkonus 11 zugeordnete Kegelwinkel 9 Grad beträgt. Somit ist der Kegelwinkel der Einführungsfase 18 kleiner als der Kegelwinkel des Spreizkonus 11.

Die Wulst 20 im Bereich der vorderen Stirnkante oder Stirnfläche 19 der Spreizschenkel 16 ist radial nach innen vorspringend ausgebildet. Wie man in den Figuren 1 und 2 erkennt, ist dabei die Berührungsfläche zwischen der Wulst 20 und dem Kegelmantel 21 des Spreizkonus 11 sehr klein. Dies gestattet es der Wulst 20, beim Einziehen des Spreizkonus 11 in die Spreizhülse 14 auf den Bauwerkstoff 1 eine hohe ringförmige Pressung auszuüben. Die radial nach innen weisende Ringfläche der Wulst 20 kann, wie in Fig. 2 zu erkennen ist, entsprechend dem Kegelwinkel des Spreizkonus 11 abgeschrägt sein, um eine gleichmäßige Auflage der Wulst 20 auf dem Kegelmantel 21 zu gewährleisten.

Wie Fig. 1 zeigt, liegt die Spreizhülse 14 an ihrem vom Spreizkonus 11 abgewandten Ende gegen einen Zwischenring 22 aus Kunststoff mit mehreren umlaufenden Rippen 23 an.

Der Zwischenring 22 stützt sich an dem von der Spreizhülse 14 wegweisenden Ende gegen eine Distanzhülse 24 ab, deren Außendurchmesser dem Außendurchmesser der nichtaufgespreizten Spreizhülse 14 entspricht. Im Bereich der äußeren Oberfläche 6 des Bauwerkstoffes 1 erkennt man eine um die Distanzhülse 24 umlaufende Markierungsnut 25.

Vor dem Befestigen des Befestigungsgegenstandes 4 am Bauwerkstoff 1 wird der Spreizanker 3 durch eine Öffnung 26 im Befestigungsgegenstand 4 in das zylindrische Bohrloch 2 eingesteckt und die Sechskantmutter 7 oder die Ankerstange 9 so lange verdreht, bis der Spreizkonus 11 die Spreizhülse 14, ohne die Spreizschenkel 16 aufzuweiten, gegen den Zwischenring 22 leicht andrückt und bis der Zwischenring 22 gegen die Distanzhülse 24 und die Distanzhülse 24 gegen die Unterlegscheibe 5 anliegt.

Wenn die Gewindestange 9 des in das Bohrloch 2 eingesetzten Spreizankers 3 mit Hilfe eines in deren Schlitz 27 eingesteckten Schraubenziehers festgehalten und die Sechskantmutter 7 angezogen wird, erfolgt ein Einziehen des Spreizkonus 11 in die Spreizhülse 14. Dabei verkürzt sich der Abstand zwischen der Sechskantmutter 7 und dem Spreizkonus 11. Je weiter der Spreizkonus 11 in die Spreizhülse 14 eingezogen wird, um so mehr werden die Spreizschenkel 16 im Bereich der Einführungsfasen 18 über die dort jeweils vorhandene Wulst 20 nach außen gedrückt. Die Wulst 20 erzeugt aufgrund ihrer kleinen Auflagefläche auf dem Bauwerkstoff 1, der beispielsweise Beton ist, eine hohe ringförmige Pressung. Durch die hohe Pressung wird dieser Ring in den Bauwerkstoff 1 eingedrückt und bildet dort eine tiefe Hinterschneidung 28 in der Wandung 29 des Bohrloches 2.

Fig. 3 zeigt die Verformung der Spreizschenkelenden im Bereich einer Einführungsfase 18 eines Spreizschenkels 16 am Ende des Spreizvorganges.

Falls nach dem Setzen des Spreizankers 3 in einer Rißzone der Bohrlochdurchmesser aufgrund eines Risses steigt, fällt die Spannung zwischen der Spreizhülse 14 und der Wandung 29 entweder stark oder ganz ab. Es bleibt jedoch ein Verzahnungseffekt im Bereich der Wulst 20 vorhanden, der wiederum bei Auftreten von größeren Zuglasten dafür sorgt, daß die Spreizhülse 14 auf der Stelle fixiert bleibt und der Spreizkonus 11 in die Spreizhülse 14 hineinschlüpft. Dabei ist es nicht erforderlich, daß die Reibungsverhältnisse zwischen dem Spreizkonus 11 und der Spreizhülse 14 genau definiert sind.

Die glatte Außenfläche der Spreizhülse 14 ermöglicht ein problemloses Setzen des Spreizankers 3. Nach dem Setzvorgang liegen die Spreizschenkel 16 in ihrem konischen Bereich, d.h. im Bereich der Einführungsfasen 18, an der Bohrlochwandung 29 an, wobei die Flächenpressung gleichmäßig und dadurch gering ist. Die ganze Energie am Anfang des Setzvorgangs wird zum Ausstellen des Wulstes 20 in der in Fig. 3 gezeigten Weise verwendet. Dazu sind die Kegelwinkel des Spreizkonus 11 und die Verjüngung oder die Kegelwinkel der Einführungsfasen 18 der Spreizschenkel 16 aufeinander abgestimmt und betragen in der Spreizhülse 14 etwa 6 Grad und am Spreizkonus 11 etwa 9 Grad.

Nach dem Setzen des Spreizankers 3 wird nicht nur eine reibschlüssige Verbindung sondern eine gute formflüssige Verbindung zwischen der Spreizhülse 14 und dem Bauwerkstoff 1, insbesondere Beton, erreicht. Versuche haben gezeigt, daß der Spreizanker 3 besonders rißtauglich ist, d.h. auch bei Vergrößerungen des Bohrloches 2 infolge von Rissen eine sichere Verankerung gewährleistet.

## Patentansprüche

1. Spreizanker mit einer am Einstecken eine innere Einführungsfase (18) und mehrere sich in axialer Richtung erstreckende Schlitze (15) aufweisenden Spreizhülse (14), durch die sich eine Ankerstange (9) erstreckt, die an ihrem dem Einsteckende des Spreizankers zugewandten Ende über eine zum Aufspreizen der Spreizhülse axial in diese einziehbaren Spreizkonus (11) verfügt, wobei der Außendurchmesser der Spreizhülse im Bereich der durch die Schlitze gebildeten Spreizschenkel konstant ist, **dadurch gekennzeichnet, daß** der Kegelwinkel der inneren Einführungsfase (18) kleiner als der Kegelwinkel des Spreizkonus (11) ist und daß an dem in Einsteckrichtung weisenden freien Ende der Spreizschenkel (16) innerhalb der Einführungsfase (18) eine umlaufende radial nach innen vorspringende Wulst (20) ausgebildet ist.

2. Spreizanker nach Anspruch 1, **dadurch gekennzeichnet,** daß die Wulst (20), die in axialer Richtung weisende Stirnfläche (19) der Spreizschenkel (16) bildet.

3. Spreizanker nach Anspruch 1, **dadurch gekennzeichnet,** daß die Wulst (20) gegenüber der Stirnfläche (19) der Spreizschenkel (16) zurückversetzt vorgesehen ist.

4. Spreizanker nach Anspruch 1 oder 2, **dadurch gekennzeichnet,** daß die Wulst (20) in radialer Richtung bis in die Nähe des Innendurchmessers der Spreizhülse (16) reicht.

5. Spreizanker nach einem der vorstehenden Ansprüche, **dadurch gekennzeichnet,** daß die Einführungsfase (18) sich über ein Drittel der Länge der Spreizschenkel (16) erstreckt.

6. Spreizanker nach einem der vorstehenden Ansprüche, **dadurch gekennzeichnet,** daß die Einführungsfase (18) in etwa die Länge des Kegelmantels (21) des Spreizkonus (11) aufweist.

7. Spreizanker nach einem der vorstehenden Ansprüche, **dadurch gekennzeichnet,** daß die radial nach innen weisende Ringfläche der Wulst (20) entsprechend dem Kegelwinkel des Kegelmantels (21) des Spreizkonus (11) abgeschrägt ist.

## Claims

1. An expansible anchor comprising an expansible sleeve (14) which at the insertion end has an inner introduction bevel (18) and a plurality of axially extending slots (15) and through which extends an anchor rod (9) which at its end towards the insertion end of the expansible anchor has an expansion cone (11) which can be pulled axially into the expansible sleeve for expanding same, wherein the outside diameter of the expansible sleeve is constant in the region of the expansible limbs formed by the slots, characterised in that the taper angle of the inner introduction bevel (18) is smaller than the taper angle of the expansion cone (11) and that provided at the free ends, which face in the insertion direction, of the expansible limbs (16), within the introduction bevel (18), is a radially inwardly projecting bead (20) which extends therearound.

2. An expansible anchor according to claim 1 characterised in that the bead (20) forms the end face (19) of the expansible limbs (16), said end face (19) facing in the axial direction.

3. An expansible anchor according to claim 1 characterised in that the bead (20) is disposed in a set-back position with respect to the end face (19) of the expansible limbs (16).

4. An expansible anchor according to claim 1 or claim 2 characterised in that the bead (20) extends in a radial direction into the proximity of the inside diameter of the expansible sleeve (16).

5. An expansible anchor according to one of the preceding claims characterised in that the introduction bevel (18) extends over a third of the length of the expansible limbs (16).

6. An expansible anchor according to one of the preceding claims characterised in that the introduction bevel (18) approximately corresponds to the length of the taper surface (21) of the expansion cone (11).

7. An expansible anchor according to one of the preceding claims characterised in that the radially inwardly

4

facing annular face of the bead (20) is bevelled to correspond to the taper angle of the taper surface (21) of the expansion cone (11).

## Revendications

1. Boulon d'ancrage à expansion, avec une coquille expansible (14) qui présente plusieurs fentes (15) s'étendant dans le sens axial et un biseau d'introduction intérieur (18) à son extrémité d'insertion, et à travers laquelle s'étend une tige d'ancrage (9) qui dispose, à son extrémité tournée vers l'extrémité d'insertion du boulon d'ancrage, d'un cône d'expansion (11) qui peut être renfoncé axialement dans la coquille expansible afin de réaliser l'expansion de cette dernière, le diamètre extérieur de la coquille expansible dans la région des branches expansibles formées par les fentes étant constant, caractérisé en ce que l'angle de cône du biseau d'introduction intérieur (18) est plus petit que celui du cône d'expansion (11), et en ce qu'un bourrelet entourant (20), dépassant radialement vers l'intérieur est configuré à l'extrémité libre des branches expansibles (16) orientée dans le sens d'insertion, à l'intérieur du biseau d'introduction (18).

2. Boulon d'ancrage à expansion selon la revendication 1, caractérisé en ce que le bourrelet (20) constitue la face frontale (19), orientée dans le sens axial, des branches expansibles (16).

3. Boulon d'ancrage à expansion selon la revendication 1, caractérisé en ce que le bourrelet (20) est prévu en retrait par rapport à la face frontale (18) des branches expansibles (16).

4. Boulon d'ancrage à expansion selon la revendication 1 ou 2, caractérisé en ce que le bourrelet (20) s'étend dans le sens radial jusqu'à proximité du diamètre intérieur de la coquille expansible (14).

5. Boulon d'ancrage à expansion selon l'une des revendications précédentes, caractérisé en ce que le biseau d'introduction (18) s'étend sur un tiers de la longueur des branches expansibles (16).

6. Boulon d'ancrage à expansion selon l'une des revendications précédentes, caractérisé en ce que le biseau d'introduction (18) présente approximativement la longueur de la face d'enveloppe (21) du cône d'expansion (11).

7. Boulon d'ancrage à expansion selon l'une des revendications précédentes, caractérisé en ce que la face annulaire orientée radialement vers l'intérieur du bourrelet (20) est biseautée conformément à l'angle de cône de la face d'enveloppe (21) du cône d'expansion (11).

_Fig. 1_

**Fig. 2**

**Fig. 3**